(19) Europäisches Patentamt / European Patent Office / Office européen des brevets

(11) **EP 4 600 010 A1**

(12) **EUROPEAN PATENT APPLICATION**

(43) Date of publication:
**13.08.2025  Bulletin 2025/33**

(21) Application number: **25155849.0**

(22) Date of filing: **04.02.2025**

(51) International Patent Classification (IPC):
**B29C 44/34** (2006.01)     **B29C 44/60** (2006.01)
**B29C 44/12** (2006.01)     **B29C 44/42** (2006.01)
**B29K 75/00** (2006.01)     **B29L 31/00** (2006.01)

(52) Cooperative Patent Classification (CPC):
**B29C 44/60; B29C 44/1242; B29C 44/3403;**
**B29C 44/42;** B29K 2075/00; B29K 2995/0015;
B29L 2031/7622

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.02.2024  IT 202400002737**

(71) Applicant: **Cannon Tipos S.r.l.
21042 Caronno Pertusella (VA) (IT)**

(72) Inventors:
• **VOLPATO, Marco**
  **21042 Caronno Pertusella (VA) (IT)**
• **CASTELNOVO, Andrea**
  **21042 Caronno Pertusella (VA) (IT)**
• **CORTI, Maurizio**
  **22100 Como (IT)**

(74) Representative: **Botti & Ferrari S.p.A.
Via Cappellini, 11
20124 Milano (IT)**

(54) **IMPROVED EQUIPMENT FOR MAKING THERMAL INSULATION IN FOAM FOR A THERMO-ACCUMULATION TANK FOR HOT OR COLD WATER OR WATER HEATER AND RELATED METHOD**

(57)     It is herein described an equipment (1) for making thermal insulation in expanded foam for a thermo-accumulation tank (3) for hot or cold water or water heater comprising
- a sealing mould (2, 2') adapted to house the tank (3), a hollow layer (6) being comprised between inner walls (2C) of the mould (2) and the tank (3) to be housed;
- a vacuum generator system comprising at least one vacuum accumulator tank (32) connected to a vacuum pump, said vacuum generator system being connected to the mould (2) by at least one suction duct (18);
- at least one plugging system of said suction duct;
- at least one pressure transducer for depression control connected to a command and control unit (36) adapted to apply said depression;
- at least one activation and depression control valve (19) comprising a control valve of the on-off type or a control valve of the proportional type controlled by the command and control unit (36) adapted to allow a controlled flow of external air for the vacuum accumulator tank (32);
- said vacuum generator system, said at least one plugging system, said at least one activation and depression control valve (19), said at least one pressure transducer connected to the command and control unit (36), being adapted to generate, control and maintain a pressure lower than the atmospheric pressure in said mould (2, 2'), thus increasing a flow scrolling and expansion speed of a polyurethane resin injected via a pluggable injection inlet (11) into the hollow layer (6) between the mould (2, 2') and the tank (3) to be housed.

**FIG. 3**

**Description**

Field of application

The present invention relates to an equipment for making thermal insulation in foam of a container tank for hot or cold water or water heater.

Said invention finds application, in particular, in the insulation field for thermal insulation by means of a foaming technology aimed at covering these pressurised heat-accumulation tanks for hot or cold water by means of a thermally insulating layer of expandable reactive resin.

The present invention also relates to a related method.

The following description is made with reference to this application field with the only purpose of simplifying the exposition thereof.

Prior art

As it is well known, the sealed thermo-accumulation containers for hot or cold water or water heaters, the so-called boilers, are now subject to the energy efficiency classification regulation (energy label) which takes into account various features, among which heat dispersion over time is very important.

For this reason, an insulation for thermal insulation is applied to these thermo-accumulation containers for hot or cold water or water heaters with new criteria that require both an increase in the insulation thickness and the application of a much more complex and detailed geometry of the insulation, characterised by considerable care and attention to the finishing of the coating of details and accessories that are incorporated into the thermal insulation.

There are currently four types of classified water heaters, according to which the thermal efficiency class is classified:

- Conventional water heater with electric resistances;

- Heat pump water heater;

- Hot water tank;

- Solar electric water heater.

Moreover, insulation is also useful for thermos-accumulators for cold water serving heat pumps and summer air conditioning systems.

The tanks are usually cylindrical in shape with closing caps adapted to hold the water pressure.

Other tanks have a lanceolate rectangular section with welds on the narrow edges. This shape is also adapted to hold the internal pressure.

It is also a common and widely applied technique to make tanks with different heights, that is, with variable longitudinal development while maintaining the same cross-section.

This is industrially convenient to produce tanks with the same shape or diameter but with different heights based on the volume of water to be accumulated.

Indeed, this allows the use of common materials and pressure verification calculations for all sizes with the same section and also allows the use of many accessories, such as resistors, fittings, hooks, bases etc., which are common to the model with different heights.

The solutions currently used, although effective and widely used, are still not perfectly effective both in terms of speed and insulation precision. This is mainly due to the methods currently used to form the necessary thermal insulation layer.

Thus, the technical problem of the present invention is to provide a technical solution which solves the current drawbacks of the prior art.

An object of the invention is to provide a solution that allows making insulation layers of the thermo-accumulation containers for hot or cold water or water heaters efficiently, effectively, quickly and with complete filling of the hollow layer.

A further object of the invention is to provide a solution that can also be implemented in prior art systems, with the changes to be made that do not have a particularly significant impact on the overall modification to the moulds, on production times and costs.

Finally, an object of the invention is to provide a solution that can be used for different types of moulds and for different types and sizes of thermo-accumulation containers for hot or cold water or water heaters.

Summary of the invention

The solution idea underlying the present invention is to provide a solution that provides a different behaviour of a material suitable for the insulation of thermo-accumulation containers for hot or cold water or water heaters based on the conditions of the shapes and external surfaces thereof.

Based on this solution idea, the technical problem is solved by an equipment for making a thermal insulation in expanded foam for a thermo-accumulation tank for hot or cold water or water heater comprising a sealing mould adapted to house the tank, with a hollow layer comprised between inner walls of the mould and the tank to be housed, a vacuum generator system connected to the mould by means of at least one suction duct, at least one plugging system of the suction duct, at least one activation and depression control valve, at least one pressure transducer for depression control connected to a command and control unit adapted to apply said depression.

The depression control within the hollow layer may be carried out in feedback with the measurement of the internal pressure in the cavity.

The vacuum generator system, the at least one plugging system, the at least one activation and depression control valve, the at least one pressure transducer connected to the command and control unit are adapted to generate, control and maintain a pressure lower than atmospheric pressure in the mould, thus increasing the flow scrolling, expansion speed and reducing the total density of a polyurethane resin foam injected via a pluggable injection inlet into the hollow layer between the mould and the tank to be housed.

In other words, in a substantially vacuum condition, the foam expands faster and therefore flows better and fills the hollow layer more efficiently since it expands earlier when less viscous and therefore the density distribution is more homogeneous. This also results in an average lower density and a smaller amount is used to adequately fill the hollow layer.

Advantageously, the present solution allows exploiting a different pressure, specifically a depression, i.e. a pressure lower than the atmospheric pressure, of the hollow layer with respect to the external atmospheric pressure to promote the expansion of a polyurethane resin foam mixed and injected into the same hollow layer, to fill said cavity and coat and make the foam perfectly adhere to the walls of the tank to be insulated, and prevent the foam from advancing into the suction duct.

The junction surfaces of the mould and the surfaces that allow the sealing closure of pipes and access fittings to the thermo-accumulation tank for hot or cold water are preferably equipped with sealing gaskets that seal the hollow layer of the mould.

The presence of the control unit, advantageously, ensures the possibility for a user to set and monitor the desired pressure trend in the hollow layer.

Moreover, the vacuum generator system comprises at least one vacuum accumulator tank connected to a vacuum pump.

Advantageously, the present solution allows for efficient suction during the application step of the depression of the hollow layer, promoting flow scrolling and foam expansion, thus reducing its average density and therefore the total quantity needed to fill the hollow layer.

Furthermore, the activation and depression control valve is a control valve of the on-off type, being easy to be implemented and controlled, since it involves simply closing one or more valves when the desired reference value has been reached, or is a control valve of the proportional type controlled by the control unit adapted to allow a controlled flow of external air for the vacuum accumulator tank, allowing managing the required gas pressure within the foam expansion cavity depending on its proximity to the desired reference value and generating increasing depression values in the vacuum accumulator tank and in the suction duct thereto connected in the presence of an aspiration.

Advantageously, the efficient suction during the application step of the depression of the hollow layer allows reducing the size and therefore the energy consumption of the vacuum pump.

Preferably, the equipment comprises a plurality of valves of the on-off type in parallel, which are adapted to open and close external air intake inlets for the tank.

Advantageously, the present solution allows air taken from the atmosphere to be introduced into the accumulation tank in order to generate increasing depression values in said vacuum accumulator tank and in the suction duct connected thereto in the presence of an aspiration.

According to a different embodiment, the vacuum generator system comprises at least one Venturi effect vacuum generator connected to the suction duct.

Advantageously, the present solution ensures reduced pressure drops, short response times and always an increase in the required energy efficiency.

Preferably, according to the invention, the plugging system comprises a hydraulic or pneumatic actuator and a translating pin on a respective sealing coupling surface, said system being adapted to enable the suction duct in an initial injection step and to plug said suction duct in an advanced expansion step of said polyurethane resin.

Advantageously, the present solution prevents that, when the polyurethane resin expands into foam form, it does not block at least one suction duct of the equipment.

According to an embodiment, the actuator is time controlled.

Advantageously, the present solution is easy to be implemented by blocking the suction duct at the moment in which, according to tests carried out, it is provided that the foam has completely covered the tank to be insulated.

Alternatively, according to a different embodiment, the equipment further comprises a foam detection sensor at the gas suction duct adapted to activate the actuator and/or at at least two detection positions between the injection inlet and the suction duct.

Advantageously, the present solution allows the connection of the suction duct to be interrupted when, for each specific case, the reaching of the expansion front and flow scrolling of the foam at said suction duct has been detected, and/or closing the suction duct when reached by the expanding polyurethane resin foam.

Still preferably, in another embodiment, the vacuum generator system is connected to the mould by means of a plurality of suction ducts.

Advantageously, the present solution allows optimizing the transition time to reach the desired pressure conditions, and in particular depression conditions.

In an embodiment of the invention, the at least one suction duct is provided at a distance from the injection inlet to minimize a mean square value, according to the formula:

$$Dm = \sqrt{\frac{1}{N} \cdot \sum_{1}^{n} (D1_n^2 + D2_n^2)}$$

where $Dm$ = mean square value of the sum of the distances between the at least one suction duct and the injection inlet;

$D1_n$ and $D2_n$ = $n^{th}$ distances measured between the injection inlet and the suction duct along two $n^{th}$ surface lines defined by an $n^{th}$ section plane of the tank to be housed in the mould passing the injection inlet and the suction duct, with an excess tolerance by 30%.

Advantageously, said solution allows optimizing the operation of the equipment according to the invention in terms of efficiency and effectiveness of pressure adjustment of the gases inside the hollow layer which oppose the expansion of the foam.

According to a further embodiment, the mould comprises removable spacers adapted to vary an overall height of the mould itself.

Advantageously, the present solution allows obtaining a self-adapting mould for tanks having the same section but a different height.

Advantageously, the present solution allows making a vacuum seal by means of sealing gaskets placed inside slots obtained on said removable spacers able to vary the overall height of the mould itself.

In an embodiment, the present solution further provides a translating plugging valve system which opens and/or closes the injection inlet.

Furthermore, preferably, the equipment comprises a hydraulically or pneumatically controlled cylindrical or pneumatic slider adapted to interrupt an insertion of reagent resin and to allow removing the mixing head.

Preferably, the mould comprises a bottom, two sections that can be couple by means of similar edges and equipped with closing and tightening devices with related sealing gaskets, a movable cover, and circumferential seals at accesses to the mould.

Advantageously, the present solution is technically reliable, efficient and robust.

According to a further aspect of the present invention, it is provided a foam insulation method of a thermo-accumulation tank for hot or cold water or water heater comprising the steps of:

- providing a sealing mould shaped to house a tank with a hollow layer comprised between inner walls of the mould and the tank to be housed;

- providing a vacuum generator system connected to the mould by at least one suction duct;

- providing an activation and depression control valve, at least one pressure transducer, a command and control unit to control the depression application;

- injecting a mixed polyurethane resin in the reaction step into the hollow layer through an injection inlet;

- generating and controlling a pressure in the mould from at least one suction duct connected to the mould, thus increasing the flow scrolling, the expansion speed and reducing the overall density of the polyurethane resin foam in the hollow layer by the vacuum generator system, the at least one activation and depression control valve, the at least one pressure transducer.

Advantageously, the present invention allows improving the performance during the manufacturing step and in terms of final quality of the product insulation.

Preferably, the step of controlling the pressure in the mould provides for adjusting from a gradually lowered higher pressure.

Advantageously, it is thus possible to compensate for the slowing down of the flow scrolling and of the related front due to the increase in viscosity of the foam, to increase the air flow expelled by the expansion of the foam and therefore help the flow scrolling due to the increase in this viscosity.

The depression is made and maintained in a controlled manner by sucking a part of the air present in the cavity and which continues drawing, even if in reduced quantities, from the seals.

According to an embodiment, the step of controlling the pressure in the mould provides for a pressure variation according to preset values or a continuous variation by tracing a linear interpolation curve between preset values.

Said variation can be set either in successive steps or according to values interpolated from point to point of a diagram that sets depression values (absolute pressure values) in the suction system depending on time.

Alternatively, the step of controlling the pressure in the mould provides for a pressure control according to memorized time increments.

Advantageously, the time increments may be varied based on the specific needs of the application.

Alternatively, the step of controlling the pressure in the mould provides for a control of the pressure according to a closed control loop in feedback of at least one pressure transducer placed on the suction duct.

Advantageously, the present solution is always updated on the specific operating conditions of the equipment.

Alternatively, the step of controlling the pressure in the mould provides for a pressure variation according to depression values connected to detection sensors of the foam expansion front.

Advantageously, the present solution provides for applying suction to reach and maintain the pressure value set for that arrival point of the foam front according to different control modes, and a new pressure value will be applied to reach a further contact point with the foam front.

According to an embodiment, the step of generating and controlling the pressure in the mould comprises controlling increasing depression values in a time that elapses between a 25% expansion phase of the foam of the polyurethane resin and a 60% expansion phase of the foam of the polyurethane resin.

Advantageously, this range corresponds to the expansion within which the foam reaches values close to the maximum expansion speed.

The features and advantages of the equipment and method according to the invention will become apparent from the following description of an embodiment thereof, given by way of non-limiting example with reference to the enclosed drawings.

Brief description of the drawings

In those drawings:

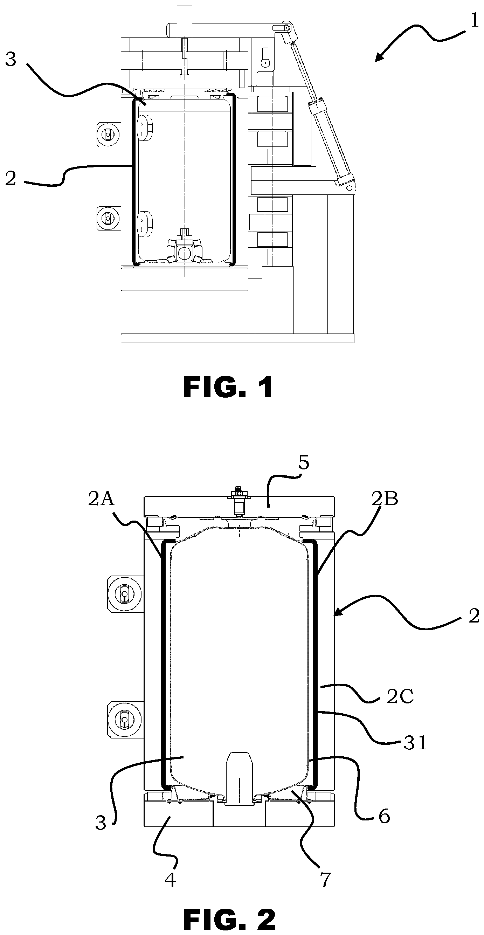

- Figure 1 schematically shows an equipment for making a thermal insulation in expanded foam for a thermo-accumulation tank for hot or cold water or water heater according to the invention;

- Figure 2 schematically shows a mould according to the invention which is shaped so as to comprise a hollow layer between the internal surface of the mould itself and the tank corresponding to the insulating layer to be made;

- Figure 3 emphasizes a detail of the mould of Figure 2 with suitable holes or shaped cavities adapted to house protruding fittings equipped with sealing gaskets at a mould cover;

- Figure 4 shows a detail of a system for inserting and removing sealing gaskets on fittings protruding from the tank of the mould of Figure 2;

- Figure 5 schematically shows a retaining plate of the equipment of Figure 1 in a fixed position with respect to the bottom of the tank by means of suction cup locks that can be activated by means of a suitable command;

- Figure 6 schematically shows an injection point of a polyurethane resin into the hollow layer of the mould of Figure 2;

- Figure 7 schematically shows a detail of Figure 6;

- Figure 8 schematically shows a controlled sealing closing element that allows separating, in a sealing manner, a mixing head from the hollow layer at the injection point of Figure 6;

- Figure 9 shows a system for plugging a suction duct of the equipment of Figure 1;

- Figure 10 shows two alternative diagrams for generating and controlling the pressure in the hollow layer according to the invention;

- Figure 11 shows a further diagram for generating and controlling the pressure comprising a Venturi effect vacuum generator;

- Figure 12 shows a diagram comprising two exemplifying curves of the gas pressure trend in the hollow layer for high reactivity foam and therefore with a short complete expansion time and slow reactivity foams which therefore fill the hollow layer in a longer time;

- Figures 13 and 14 show two diagrams relating to two embodiments of valve activation in the equipment according to the invention;

- Figure 15 shows a diagram representing the case of applying the depression when the foam has already started to expand and therefore to cause an increase in pressure in the hollow layer but applying only one step of depression for the entire expansion;

- Figure 16 shows an axonometric view of an exemplifying embodiment of self-adapting mould to the different longitudinal dimensions of the thermo-accumulation containers for hot or cold water or water heaters to be coated with insulating foam;

- Figure 17 schematically shows an operation of the self-adapting mould of Figure 16 in a plan view;

- Figure 18 also schematically shows an operation of the self-adapting mould of Figure 16 in elevation view;

- Figure 19 also schematically shows an operation of the self-adapting mould of Figure 16.

Detailed description

With reference to those figures, it is herein described an equipment for making a thermal insulation in expanded foam for a thermo-accumulation tank for hot or cold water or water heater made according to the present invention, globally indicated as equipment 1.

It is worth noting that the figures represent schematic views and are not drawn to scale, instead they are represented so as to emphasize the important features of the invention. Furthermore, in the figures, the several pieces are represented schematically, their shape varying depending on the desired application. Moreover, particular features illustrated in a figure in connection to an embodiment may also be used in one or more of the embodiments illustrated in the other figures.

Furthermore, structurally and functionally identical elements in the several figures, and in particular analogous to the prior art solutions described above, are indicated hereinafter with the same alphanumeric references.

In the following description, relative terms such as "on", "under", "upward", "downward" will be used with reference to the figures just to simplify the exposition thereof.

Finally, indications of particular geometries (circular, rectangular) or of the arrangement of the elements (parallel, orthogonal, contiguous), as well as the term "substantially" should always be intended in relation to physical and not geometrically abstract elements, and therefore must always take into account the tolerances introduced by the passage from a pure mathematical/geometric world to the real world.

The equipment 1 comprises a sealing mould 2 adapted to contain a tank 3 to be insulated.

The tank 3 is fixed to the mould 2 by a centering and fixing shape coupling, specific for each tank, with a bottom 4 and a cover 5 of the mould 2 itself.

Furthermore or alternatively, fixing and centering elements such as pins, spacers, shaped adaptation elements are used.

Still furthermore or alternatively, specific housings are also adopted for the pipes or fittings protruding from the tank 3.

The mould 2 is coupled to the tank 3, so as to form a hollow layer 6 comprised between inner walls 2C of the mould 2 and the tank 3 to be insulated.

Into the hollow layer 6 a mixture of polyurethane resins is injected, which, by reacting, forms and frees expansion gases and produces a foam that expands in the hollow layer 6 to flow according to the shapes and conditions imposed by the geometry of said hollow layer 6, thus forming an expansion front which, from the injection area, expands toward the areas for expelling the air contained to fill said hollow layer 6 and form the insulating layer of the tank 3 adopted as thermo-accumulator or water heater.

In other words, a gap is maintained between the mould 2 and the tank 3 corresponding to the thermally insulating layer to be formed.

Specifically, the polyurethane foam is expanded by a blowing agent or by the reaction of water with isocyanate, which results in the formation of gaseous $CO_2$.

The polyurethane insulating foam is obtained by mixing at least two reactive resins. The resins are dosed in stoichiometric ratio by a dosing unit equipped with volumetric pumps, a system appropriately controlled to deliver the flow rates of the resins dosed according to a set stoichiometric ratio.

The resins are dosed toward a mixing head, a technology known in the field, where they can be recirculated back or simultaneously introduced, by means of jets generated by high pressure, into a mixing chamber of suitable mixing heads where the jets collide and the turbulence generated by their collision causes immediate mixing.

The insulating layer is made by on-site application, by injecting the mixed polyurethane resin and in the reaction phase in the hollow layer 6 and the reaction produces gas, which forms foam and makes it expand until it fills said hollow layer 6.

Once the polymerization has consolidated, a non-removable insulating layer is formed, i.e. applied on the tank 3 without joints that allow for separate application or removal thereof.

In an alternative embodiment, the formation of the insulating layer is provided without the presence of the tank 3, but with an internal core that reproduces the shape of the tank 3 to be covered.

In this case the insulating layer is produced in shaped coating pieces, formed separately and applied around the tank in the form of parts joined by means of suitable coupling edges.

For the present alternative embodiment with separate coatings, they are formed with half a coating for each piece of the inner core that copies the shape of the tank and some of the parts connected thereto.

In the present embodiment, the mould 2 is longitudinally divided into two sections, or cheeks, 2A and 2B, that can be couple by means of homologous edges and equipped with closing and tightening devices with related sealing gaskets 31, the two sections being then closed above and below, respectively, from the bottom 4 and the covering 5, which are in turn equipped with locking devices.

Even all of the junction areas of the mould 2 and other accesses are generally provided with suitable circumferential seals.

Preferably, the bottom 4 is fixed, whereas the cover 5 is movable, or is a vertical sliding or tiltable one by the adoption of hinges and a control actuator, or removable by suspension, for instance, from lifting hooks.

In the present embodiment, the tank 3 is housed in the mould 2 resting on a shaped plate 7, and on a bottom 4, which may be provided with access holes inside for normally cylindrical fittings 8 to house the service connections to the tank, such as, for example, the water inlet and outlet, an access for a thermometer, an access for the electrical resistances, an access for safety valves, etc.

These fittings 8 may be protruding or embedded, welded to the tank, and normally have cylindrical sections.

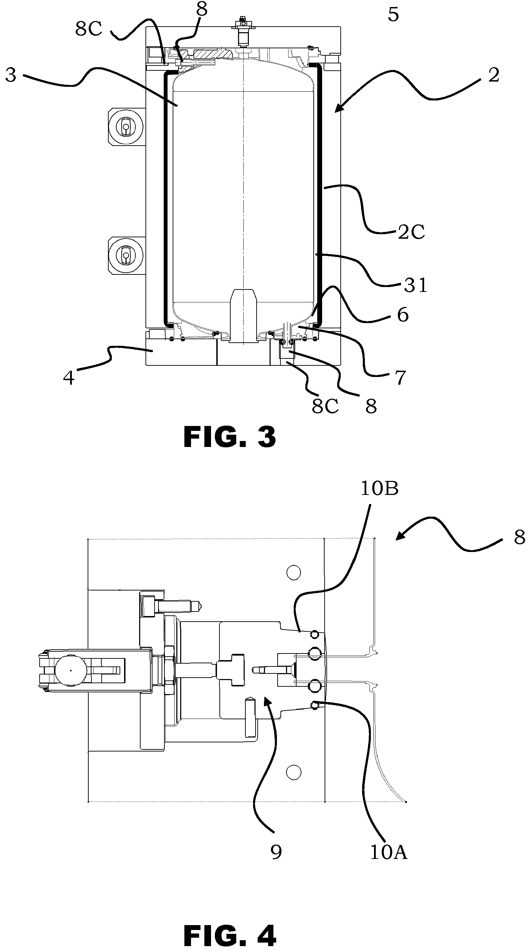

As visible in Figure 3, the mould 2 is provided with suitable cavities 8C, adapted to house said fittings 8.

These cavities may also act as a reference for positioning the tank 3 within the mould 2.

The end part and the hole for housing the fittings 8 is sealed to provide a seal and prevent penetration of the expanding polyurethane resin foam by means of seals fixed to the mould or, when necessary for removing the tank, by means of a shaped movable cap 9, equipped with seals, as shown in Figure 4.

The shaped cap 9 is provided with suitable gaskets 10 for a seal coupling, may be operated automatically or manually, and fits internally onto an inner surface 10A with the fitting 8 and onto the external surface with the surface 10B of the hole obtained in the mould.

The shaped cap 9 and the related gaskets 10 are preferably made in different types of silicone, both since it is a non-stick material compared to polyurethane resin foam, and since it allows for greater adaptability compared to the related fitting 8, compensating for any discrepancies or positioning errors due to geometric tolerances in the production phase.

Alternatively, the cap 9 may be made of silicone coated metal.

The mould 2 and the shaped caps 9 are preferably equipped with actuators and related control devices to allow the mould to be closed and engaged and opened and disengaged 2 with respect to the tank 3.

As said, the tank 3 is generally housed in the mould 3 resting on a shaped plate 7 that can be made of plastic or metal, which serves as a support and reference and which is subsequently embedded into the polyurethane resin foam in order to make it integral and suitably isolated from the tank itself.

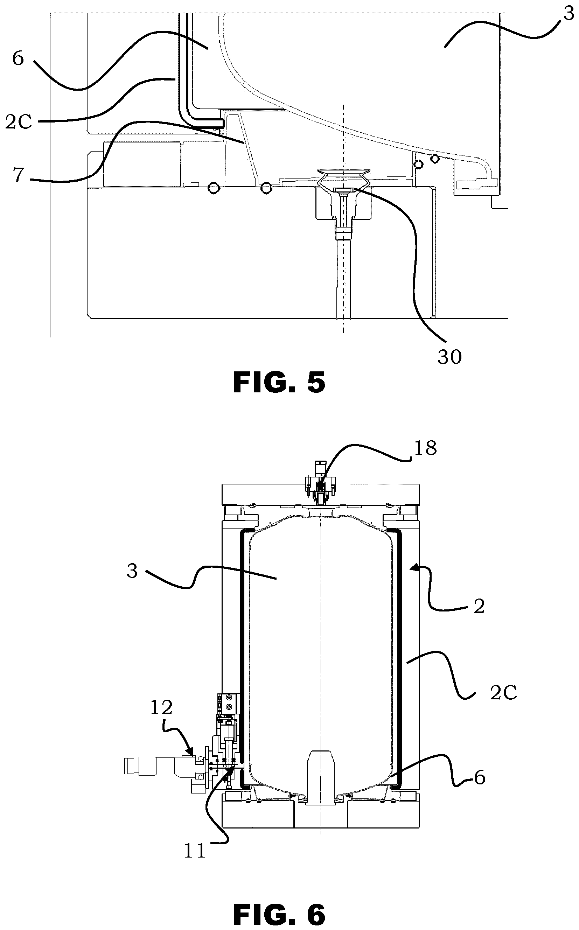

As visible in Figure 5, the shaped plate 7 is held in a fixed position with respect to the bottom of the tank 3 by means of suction cup locks 30 that are activatable by means of a suitable pneumatic command or by means of electro-activatable magnets or by means of both said suction cup locking devices 30.

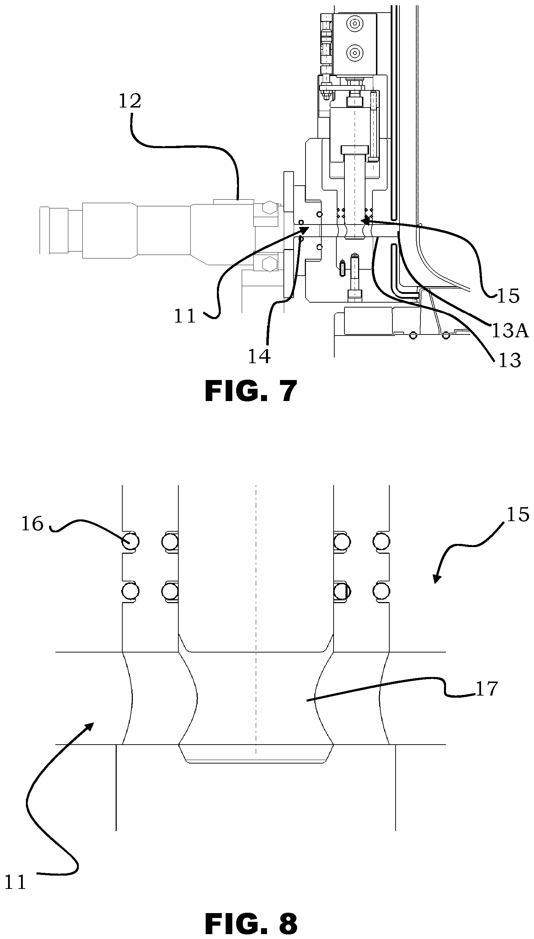

As said, the polyurethane resin is supplied by a mixing head and injected in the initial reaction phase, and this takes place, as visible in Figure 6 and in the detail shown in Figure 7, via an injection inlet 11 that connects the outside to the hollow layer 6.

The injection inlet 11 is tube-shaped with a cylindrical external section.

Nothing prevents from providing a different shape, for instance a conical shape.

The injection inlet 11 is located in the lower portion of the mould 2 close to the bottom 4.

Alternatively, it is possible to position it exactly in said bottom 4.

The injection occurs through a cylindrical delivery duct 13 that is integral with the mixing head 12. Said delivery duct is extended up to being close to a valve system 15 and is equipped with a flow scrolling internal closing element of said self-cleaning head according to a prior technique. The injection inlet is made of a first hole equipped with sealing loops 14, which act as sealings on the cylindrical or conical surface of the injection inlet 11.

Specifically, a valve system 15 with a translating plugging 17 that opens or closes the injection inlet 11 is provided at the hole 13A.

Preferably, it is possible to adopt a hydraulically or pneumatically controlled hydraulic or pneumatic slider adapted to interrupt an insertion of reagent resin and allow removing the mixing head.

As visible in Figure 8, sealing gaskets 16 are provided, which ensure the sealing and that the translating valve system remains clean from polyurethane residues along the flow scrolling walls.

The translating valve system 15 is made of a plugging 17 which, closed lowered, allows the sealing isolation between the injection inlet 11 and the hollow layer 6.

The foam portion which possibly remains between the plugging 17 and the hollow layer 6 any way may be easily removed upon opening the mould 2 since the injection inlet 17 is located at a junction portion.

Nothing prevents from providing more injection inlets 11.

Furthermore, the mould 2 is provided with at least one suction duct 18, placed in the upper portion of the mould 2, through which to control the pressure inside the hollow layer 6 prior to delivering the polyurethane resin and during its expansion phase until it fills said hollow layer 6 and pressurizes it with the expansion pressure of the foam. Specifically, a system is adopted to depressurize the hollow layer 6 with respect to the atmospheric pressure in a controlled manner.

Certainly, it is possible to adopt more than one suction duct 18.

The plugging of at least one of the injection inlets 11 ensures that the mixing head connected thereto may be removed when the foam is still in the expansion phase and therefore semi-liquid and that, therefore, a controlled pressure other than the atmospheric one may be applied inside the hollow layer 6.

In this way, flow scrolling of the foam during expansion within the hollow layer 6 is favoured.

At the exit of the suction duct 18 an activation and depression control valve 19 is provided, which is actuated by a related actuator, to allow or interrupt the flow.

Said activation and depression control valve 19 may be a time controlled valve or a valve connected to at least one foam detection sensor 34 adapted to detect when the foam is about to reach said valve.

The suction duct 18 is provided close to the furthest point from the injection inlet 11 of the reagent resin which forms the foam.

If we indicate with $D_{1n}$ e $D_{2n}$ the two $n^{th}$ distances measured along the two $n^{th}$ surface lines defined by the intersection between n sectional planes of the tank 3 which pass through the injection point 11 and the suction point 18 to generate depression, the suction duct 18 is positioned in the point where the mean square value of said distances will be minimum with an excess tolerance by 30%:

$$Dm = \sqrt{\frac{1}{N} \cdot \sum_{1}^{n} (D1_n^2 + D2_n^2)}$$

As said, even two or more suction points may be provided, which respect this condition to remove possible air bubbles in positions where pockets may form.

The depression is varied during the expansion by starting from a higher pressure in the hollow layer 6 and lowering it, in particular, in the phase in which the foam reaches a certain time after delivering, in order to compensate for the increase in viscosity of the foam. This time corresponds to the time in which the foam reaches the range between 30% and 60% of the final volume in free expansion, i.e. within a container in which the foam freely expands in the presence of atmospheric pressure. The time during which the free expansion speed reaches its maximum and then slows down due to the increase in viscosity is comprised in said range. During this time, the depression variation favours the flow scrolling of the foam precisely due to the increase in said viscosity.

Alternatively, the depression may be fixed for the entire time the foam expands and is activated immediately after the polyurethane resin is introduced in the reaction phase when this starts to expand and causes the pressure inside the hollow layer 6 to rise. The depression is made and maintained in a controlled manner by sucking in a part of the air present in the hollow layer 6 and which continues to flow, albeit in reduced amounts, from the seals.

The suction and depression made through the at least one suction duct 18 may be obtained by means of different embodiments of a depression generator system.

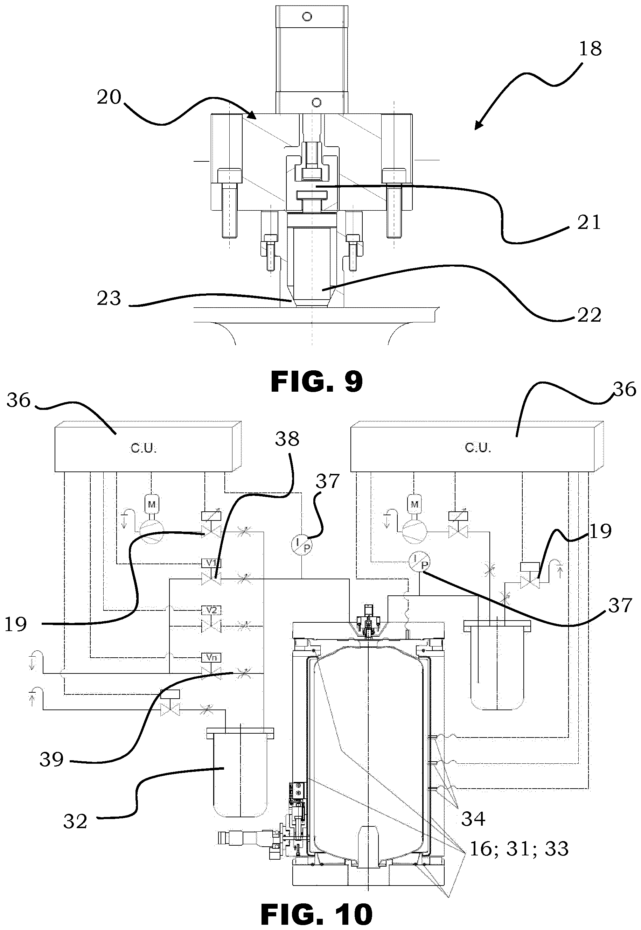

According to the invention shown in Figure 10, a depression generator system is provided, which comprises a throttling and control valve of the sucked flow at the suction duct 18 connected to a vacuum accumulator tank 32, in turn connected to a vacuum pump. The throttling valve adjusts the air flow which is blown by between the hollow layer 6 of the mould 2 and the vacuum accumulator tank 32.

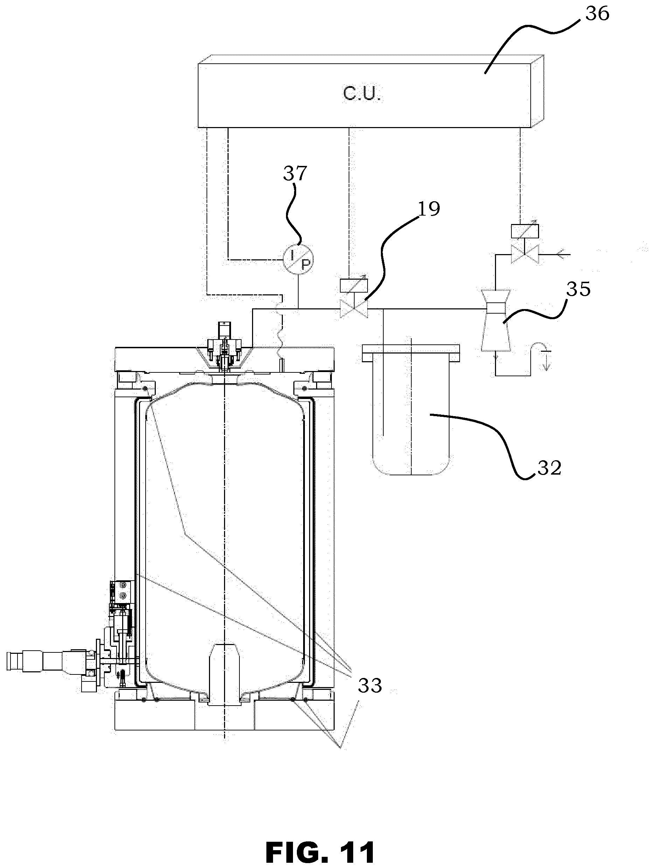

Said valve is controlled so as to adjust the flow of sucked gases maintaining a controlled depression inside the hollow layer 6. In a second alternative embodiment, shown in Figure 11, the depression generator applied to the suction duct 18 comprises a Venturi effect vacuum generator, i.e. a device fed by a compressed air flow that makes a controlled depression by means of the air speed in the Venturi effect vacuum generator itself.

Even in this case, a controlled depression is produced by modulating the air flow in the Venturi, therefore said device automatically adjusts the depression applied at the suction duct 18 in connection with the hollow layer 6.

In both cases it is preferable not to operate with continuous switching on and off of the vacuum pump to avoid an intermittent regime and possible early damage.

In a third alternative embodiment, visible in Figure 10, the depression generator applied to the suction duct 18 comprises a vacuum accumulator tank 32 directly connected both to the suction duct 18 and to a vacuum pump 9 always on. In this case the depression value inside the vacuum accumulator tank 32 is varied by controlling the introduction of air from the external atmosphere into the vacuum accumulator tank 32 by means of valves 38 which can be controlled in sequence and are equipped with adjustable throttling valves 39.

The air is preferably directly introduced through a valve of the proportional type or through a group of valves of the on-off type 38 that enable passages equipped with throttling 39. In this way the vacuum pump acts on the pressure inside the tank 32, by removing air that is introduced through the intake ducts from the outside in order to modulate the depression in tank 32 as a function of the balance between the air removed from the vacuum pump and the air introduced by the control valve of the proportional type or by the valve group 38 for a control of the on-off type. For each embodiment of the suction, the suction duct 18, or the plurality of suction ducts 18, are pluggable, by means of a plugging system 20 schematically shown in Figure 9.

Specifically, in the present embodiment, a slide valve 21 is provided, which can also be a time controlled valve or a valve connected to the at least one foam detection sensor 34 adapted to detect when the foam is about to reach said slide valve 21.

The slide valve 21 prevents the foam in the expansion phase from entering the suction duct 18 and from clogging it.

The slide valve 21 comprises a cylindrical translating pin 22 with conical or chamfered end party that closes on a sealing coupling surface 23 which also has a conical or concave chamfer, said translating pin 22 being actuated by a hydraulically or pneumatically controlled actuator. The circular cross-section area around the slide valve 21 is connected to the suction duct 18, which sucks the gases by applying vacuum.

The value of depression may be controlled according to a series of values settable over time or with a control in feedback through a pressure transducer 37 installed on a duct between tank 3 and hollow layer 6 or directly in the hollow layer 6 or in a duct that puts the tank 3 in communication with the atmosphere or in the suction duct 18.

In the embodiment which involves the use of a vacuum accumulator tank 32, it is possible to provide a control valve of the proportional type, a control valve of the on-off type, with successive pneumatic restrictions, the diagrams of such alternative and non-simultaneous solutions being schematically illustrated in Figure 10.

Moreover, in Figure 10 foam detection sensors 34 are schematically represented at at least two, preferably at least three as in this case, detection positions between the injection inlet 11 and the suction duct 18.

Moreover, an analogous foam detection sensor 34 is provided at the suction duct 18 of the gases, which is adapted to activate the actuator.

Alternatively, as visible in Figure 11, it is possible to adopt a Venturi effect vacuum generator 35 directly connected to the suction duct 18 and modulated by the air flow that feeds the Venturi effect vacuum generator 35 itself.

In the illustrated present embodiment a vacuum accumulator tank 32 is also coupled to the Venturi effect vacuum generator 35; however, nothing prevents in relative variants of this embodiment from not adopting any vacuum accumulator tank, delegating the generation of the controlled depression to the Venturi effect vacuum generator 35 alone.

As visible both in Figure 10 and in Figure 11, the signals sent, the valves described and the vacuum generator are all managed by a command and control unit 36, adapted to detect, as said, the various signals sent by the components of the mould 2 and to determine the operation thereof during its operational phase.

As still visible both in Figure 10 and in Figure 11, even all of the junction areas of the mould 2 and all of the accesses are generally provided with suitable circumferential seals 33.

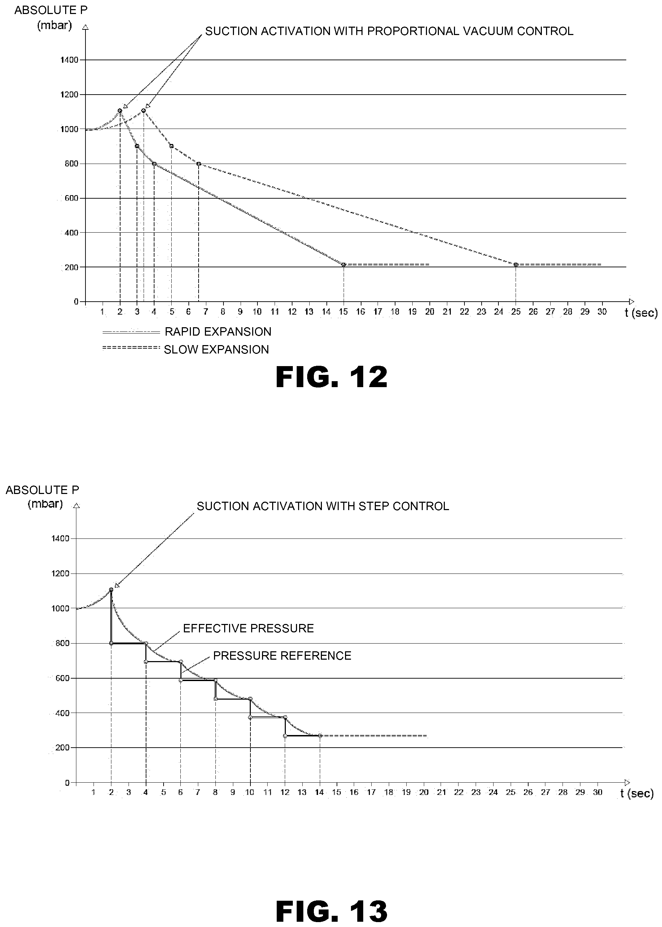

The depression control is carried out by an open loop proportional valve or by the signal of the pressure transducer 37 in feedback. The case of adoption of a closed loop control in feedback of the control valve of the proportional type is schematically illustrated in the diagram in Figure 12.

In this case, the effective pressure follows the control function which is schematized in said Figure 12 with two exemplifying curves for foam with high reactivity and therefore with a short complete expansion time and foams with slow reactivity which therefore fill the cavity in a longer time.

The control of the pressure transducer in feedback in the case of adoption of a depression control by means of a valve of the on-off type is instead shown in the diagram in Figure 13, in the case of rapid expansion foam and in the case of slower expansion foam in which the depression is adjusted with step controls on the control valve of the on-off type.

In the case of a plurality of ducts with a plurality of valves, we proceed with the activation of multiple valves that activate or close ducts in series or in parallel equipped with adjustable and pre-settable pneumatic throttles in place of the embodiment with a control valve of the proportional type.

Subsequent vacuum phases to lower the pressure in the hollow layer 6 may be planned according to a time sequence by a programmable controller or activated by specific foam presence sensors installed in the hollow layer 6 at different heights.

In case a Venturi effect vacuum generator system 35 is adopted or a vacuum accumulator tank 32 with preset depression is adopted, the depression control is carried out by means of a valve that puts the hollow layer 6 in communication with the vacuum generator system.

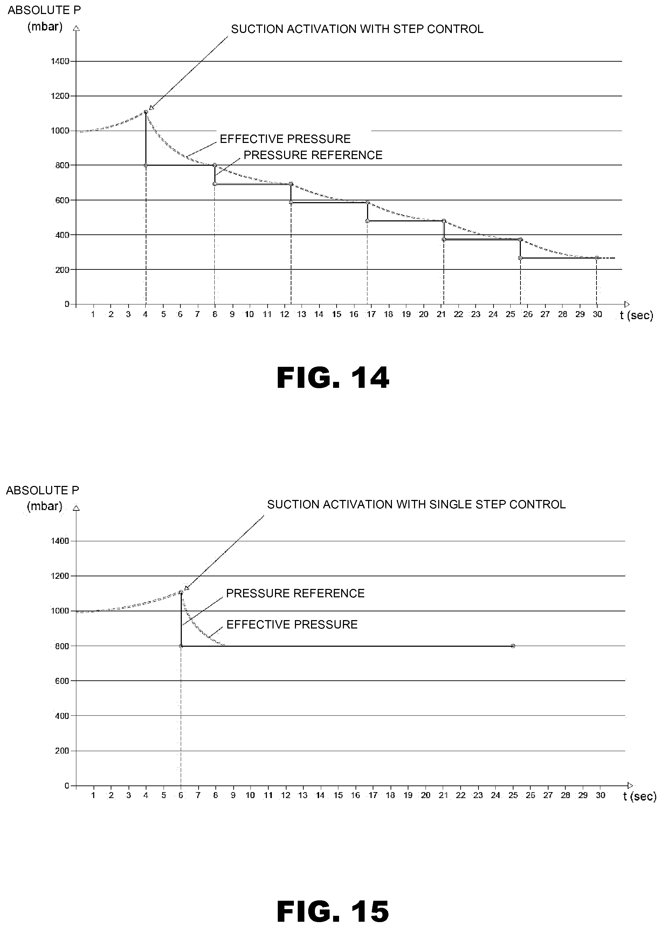

In Figure 14, the depression control diagram of this borderline case is shown, i.e. the application of depression when the foam expansion has already started, thus increasing the pressure in the hollow layer 6, but only applying one depression step for the whole expansion. Said step may be applied both through a control valve of the on-off type and through a control valve of the proportional type.

A third control system in feedback acts by leaving the vacuum pump always on and by controlling, with a proportional control valve or with a group of on-off control valves that enable passages provided with throttles, the air that is introduced from the external atmosphere into the vacuum accumulation tank 32. In this way, the vacuum pump acts on the pressure inside the tank 32 by removing air that is introduced through the intake ducts from the outside in order to modulate the depression in the vacuum accumulation tank 32 based on the balance between the air removed from the vacuum pump and the air introduced by the control valve of the proportional type or by a control valve of the on-off type.

A further alternative control system acts by leaving the vacuum pump always on and by controlling through a control valve of the proportional type, or through a series of control valves of the on-off type, installed on the duct between the vacuum pump and the vacuum accumulation tank 32, the air that is removed from the atmosphere in the vacuum accumulation tank 32 in order to modulate the depression in the vacuum accumulation tank 32 based on the balance between the air removed from the pump and the introduced air coming from the hollow layer 6.

In order to prevent the pressure from tending to zero, however, an ever-present input is provided by appropriately throttling an input from the appropriately prepared environment.

In the embodiment that provides for the use of a Venturi effect vacuum generator 35, the depression will be generated by varying the depression value generated by the Venturi effect vacuum generator 35 itself.

Said depression value is adjusted by controlling the compressed air flow that arrives onto the Venturi effect vacuum generator 35 to create the suction depression.

Said control is carried out through a flow control pneumatic valve of the proportional type.

In this case, with the Venturi effect vacuum generator, as previously said, it is not essential to apply the vacuum accumulator tank 32, whereas a direct connection of a vacuum pump with the hollow layer 6 of the mould would lead to a depression control that is too sudden and subject to strong disturbances, as well as to the risk of solid particles entering the vacuum pump and the control valves.

Therefore, as visible in Figures 12-15, in general, it is possible to set and generate a depression that is variable, based on time, from the atmospheric pressure, for instance up to the absolute pressure of aid expansion to by 200 millibar absolute.

Through the command and control unit 36 it is possible to set absolute pressure values based on time and to adjust the absolute pressure, at the suction duct 18, in steps by adjusting according to the set values or in continuous variation by performing a linear interpolation curve between the set values.

Said variation may be set either in successive steps or according to values interpolated from point to point of a diagram that sets depression values in the suction duct 18 based on time.

A second different control system provides for setting depression values connected to presence sensors of a foam front installed inside the hollow layer 6.

In this case, when the foam reaches one of the sensors in sequence, this sensor signals the presence thereof by activating an off-on signal toward the command and control unit 36.

The command and control unit 36 will apply the suction to reach and maintain the pressure value set for that arrival point of the foam front according to the control methods already described.

A new vacuum value will be applied upon reaching a further contact point with the foam front.

Figure 15 represents a borderline case of applying depression when the foam has already started to expand and therefore to cause an increase in pressure in the hollow layer 6, but applying just one depression step for the entire expansion.

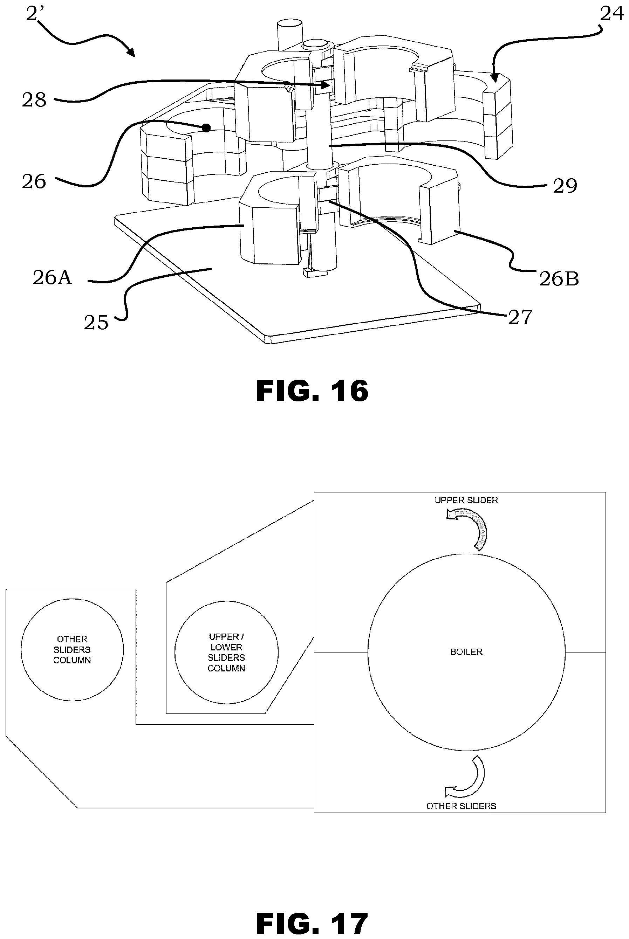

In an alternative embodiment of the present invention, shown in Figures 16-19, an adjustable mould 2' is provided to make the insulation of tanks 3 having different heights, namely having a variable longitudinal development while maintaining the same cross-section, based on the volume of water to be accumulated.

The present embodiment may be used in an equipment 1 as above described, as an alternative to the mould 2, obviously varying the needed mechanical implementation features.

In this case, the mould 2' comprises spacers 24 that can be insertable or removable, which allow adopting the mould 2' for each tank 3 having the same cross-section.

The spacers 24 are also equipped with seals both for depression making and also for simply avoiding foam drawing during expansion.

Figure 16 shows in axonometry an example of mould 2' which is self-adapting according to the different longitudinal dimensions of the tank 3.

The mould 2' comprises a base 25 on which the bottom 4 of the mould 2' is fixed and on which the tank 3 to be coated with polyurethane resin will be positioned and fixed.

On this base a first level of openable jaws 26 closes, said jaws 26 being shaped as necessary to close on the lower part of the tank 3. The lower part of the tank 3 is generally equipped with the necessary fittings and flanges to the connections outward and is generally provided with a common configuration for various sizes of different heights of tanks 3, for reasons of equipment costs and parts to be welded.

This first level of jaws 26 that also closes on the bottom 4' has the two jaws 26A, 26B which rotate about a common hinge 27, similar to the one about which the fixed sections 2A, 2B of the previous embodiment rotate.

The two jaws 26 are equipped with actuators for their closing and opening movement and with hooks actuated by the control to keep them tightened in order to retain the thrust of the expanding foam and to open them automatically or upon command at the end of the polymerization.

All of the jaws 26 are equipped with sealing gaskets for depression militainment and to prevent the expanding foam from drawing.

In order to adapt the mould 2' according to various versions to the height of the tank 3, it is provided to equip the mould 2' with other jaws 26 sections. These jaws 26 have modular heights based on the various sizes of the thermo-accumulation tanks 3 for hot or cold water or water heaters.

The jaws 26 are always openable and closable manually or through appropriate actuators and form the spacers 24 which are insertable or removable between the two jaws 26A, 26B.

In order to suitably couple with the two jaws 26A, 26B, the semi-annular surfaces are provided with edges which are insertable or couplable with each other, for instance with step shapes that have a truncated cone side in the insertion direction and, possibly, plane support surfaces to support and stack the spacers at the calibrated height.

Slots for housing the seals are obtained on the semi-annular surfaces and on the vertical surfaces parallel to the longitudinal axis.

The seals, if made offset between one spacer and the next, are inserted into special slots that run along the entire circumference of each semi-spacer.

Conversely, they can be obtained on a single support semi-annular surface and on the vertical sides or on the conical surfaces and on the vertical sides.

As visible also referring to Figure 17, in order to insert or remove the spacers 24 without creating interference, it is provided for them to be mounted with hinges 28 that rotate on a separate and rearward rotation pin 29 but aligned with the front closing section of the jaws 26 with respect to the axis of the main rotation pin 29.

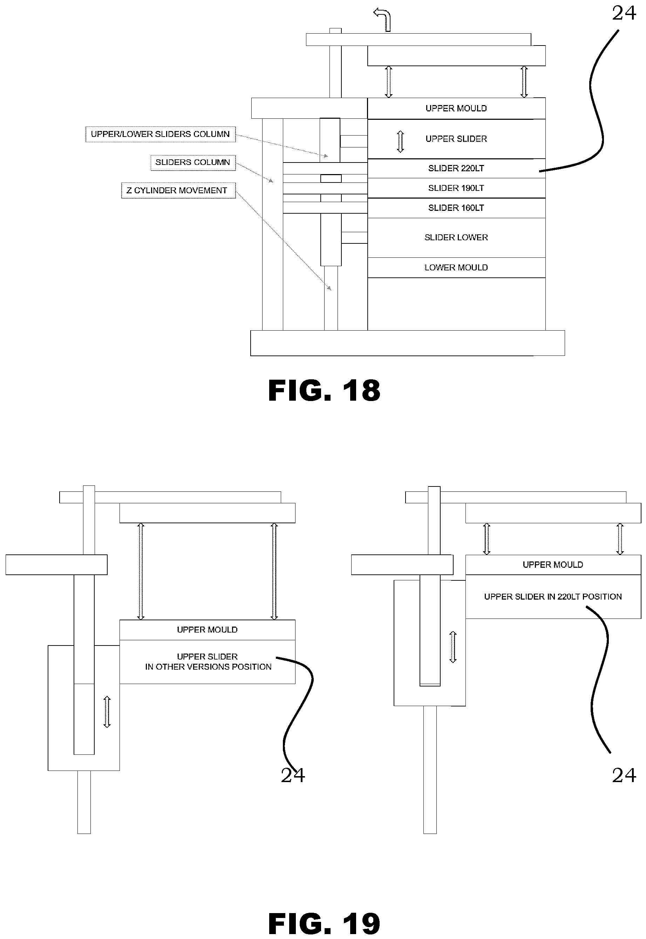

As visible also referring to Figure 18, on the main rotation pin 29 the lower jaws 26 rotate. The upper jaws 26, in order to adapt to the presence of different spacers 24, rotate and translate on the main rotational pin 29.

As visible also referring to Figure 19, a piston actuator lifts the upper jaws 26 and the structure which moves, hooks and controls the cap.

The controlled lifting movement and subsequent lowering on the spacers 24 allows closing or opening the jaws 26.

When the spacers 24 have been inserted, the upper jaws 26 are lowered and re-closed. The spacers 24 also insert an abutment element for lowering the upper jaws 26 to size during the re-closure thereof.

In this way, it is possible to automatically set the mould 2' according to various versions based on the height.

Analogously the upper jaws 26 are equipped with sealing gaskets and with an upper profile which allows adapting the cap and the seal thereof.

In any case, both versions with fixed and self-adapting moulds are equipped with gaskets adapted to depression maintenance, in the presence of the vacuum generator system. Indeed, it is provided that the gaskets will not ensure an absolute seal. They are useful to ensure sufficient sealing to maintain the depression with the vacuum generator system that drains the air that draws in a reduced way through the seals.

It is noted that the equipment an method according to the present invention allow overcoming the drawbacks of the known solutions, primarily by favouring and improving the coverage of the tanks 3 with an insulating layer, thus exploiting the different expansion behaviour of the polyurethane resin under controlled depression conditions.

Moreover, advantageously, it is possible to inject said polyurethane resin from below, thus favouring the expansion thereof, precisely, by adjusting the pressure in the layer that will house it.

Furthermore, advantageously, it is possible to operate with openable moulds equipped with gaskets both to avoid foam drawing and maintain the depression condition.

Furthermore, advantageously according to the present invention, it is possible to operate with moulds equipped with modular spacers that can be adapted to the various heights of the tank.

It is also possible to adopt the primary solution of the present invention by making modifications to pre-existing solutions for the conversion of known moulds, without particular mechanical complexities in such implementation.

Obviously a person skilled in the art, in order to meet contingent and specific needs, may make several changes and variants to the above described equipment and method, all of them falling within the scope of protection of the invention as defined by the appended claims.

In particular, different technologies may be used to make and maintain the depression in the hollow layer, different plugging systems for the suction duct or injection inlet, and different materials of the components, etc.

## Claims

1. An equipment (1) for making thermal insulation in expanded foam for a thermo-accumulation tank (3) for hot or cold water or water heater comprising:

   - a sealing mould (2, 2') adapted to house said tank (3), a hollow layer (6) being comprised between inner walls (2C) of said mould (2) and said tank (3) to be housed;
   - a vacuum generator system comprising at least one vacuum accumulator tank (32) connected to a vacuum pump, said vacuum generator system being connected to said mould (2) by at least one suction duct (18);
   - at least one plugging system (20) of said suction duct (18);
   - at least one pressure transducer (37) for depression control connected to a command and control unit (36) adapted to apply said depression;
   - at least one activation and depression control valve (19) comprising a control valve of the on-off type or a control valve of the proportional type controlled by said command and control unit (36) adapted to allow a controlled flow of external air for said vacuum accumulator tank (32);
   - said vacuum generator system, at least one plugging system (20), at least one activation and depression control valve (19), at least one pressure transducer (37) connected to said command and control unit (36), being adapted to generate, control and maintain a pressure lower than the atmospheric pressure in said mould (2, 2'), thus increasing the flow scrolling and expansion speed of a polyurethane resin foam injected via a pluggable injection inlet (11) into said hollow layer (6) between said mould (2, 2') and said tank (3) to be housed.

2. The equipment (1) according to claim 1, wherein said at least one activation and depression control valve (19) comprises a plurality of valves of the on-off type in parallel, which are adapted to open and close external air intake inlets for said tank (3).

3. The equipment (1) according to claim 1 or 2, wherein said plugging system (20) comprises a hydraulic or pneumatic actuator and a translating pin (22) on a respective sealing coupling surface (23), said plugging system (20) being adapted to enable said suction duct (18) in an initial injection step and to plug said suction duct (18) in an advanced expansion step of said polyurethane resin.

4. The equipment (1) according to claim 3, wherein said actuator is time controlled.

**5.** The equipment (1) according to claim 4, further comprising a foam detection sensor (34) at said suction duct (18) adapted to activate said actuator and/or at at least two detection positions between said injection inlet (11) and said suction duct (18).

**6.** The equipment (1) according to any one of claims 1 to 5, wherein said vacuum generator system is connected to said mould (2, 2') by means of a plurality of suction ducts (18).

**7.** The equipment (1) according to any one of claims 1 to 6, wherein said at least one suction duct (18) is provided at a distance from said injection inlet (11) to minimize a mean square value, according to the formula:

$$Dm = \sqrt{\frac{1}{N} \cdot \sum_{1}^{n} (D1_n^2 + D2_n^2)}$$

where $D_m$ = mean square value of the sum of the distances between said at least one suction duct (18) and said injection inlet (11);
$D1_n$ and $D2_n$ = $n^{th}$ distances measured between said injection inlet (11) and said suction duct (18) along two $n^{th}$ surface lines defined by an $n^{th}$ section plane of said tank (3) to be housed in said mould (2, 2') passing said injection inlet (11) and suction duct (18), with an excess tolerance by 30%.

**8.** The equipment (1) according to any one of claims 1 to 7, wherein said mould (2') comprises removable spacers (24) for rotation and translation adapted to vary an overall height of said mould (2').

**9.** The equipment according to any one of claims 1 to 8, wherein said mould (2) comprises a bottom (4), two sections (2A, 2B) that can be couple by means of similar edges and equipped with closing and tightening devices with relative sealing gaskets (31), a movable cover (5), circumferential seals (33) at accesses to said mould (2).

**10.** A foam insulation method of a thermo-accumulation tank for hot or cold water or water heater including the steps of:

- providing a sealing mould (2, 2') shaped to house a tank (3) with a hollow layer (6) comprised between inner walls (2C) of said mould (2, 2') and said tank (3) to be housed;
- providing a vacuum generator system comprising at least one vacuum accumulator tank (32) connected to a vacuum pump, said vacuum generator system being connected to said mould (2) by at least one suction duct (18);
- providing at least one pressure transducer (37), a command and control unit (36) to control the depression application, an activation and depression control valve (19) comprising a control valve of the on-off type or a control valve of the proportional type controlled by said command and control unit (36) adapted to allow a controlled flow of external air for said vacuum accumulator tank (32);
- injecting a mixed polyurethane resin in the reaction phase into said hollow layer (6) through an injection inlet (11);
- generating and controlling a pressure in said mould (2, 2') from at least one suction duct (18) connected to said mould (2, 2') thus increasing the flow scrolling and expansion speed of said polyurethane resin foam in said hollow layer (6) by said vacuum generator system, at least one activation and depression control valve (19), at least one pressure transducer (37).

**11.** The method according to claim 10, wherein said step of controlling said pressure in said mould (2, 2') provides for adjusting from a higher pressure gradually lowered below the atmospheric pressure.

**12.** The method according to claim 10 or 11, wherein said step of generating and controlling said pressure in said mould (2, 2') provides for a control of at least one pressure variation according to memorized time increments.

**13.** The method according to claim 10 or 11, wherein said step of generating and controlling said pressure in said mould (2, 2') provides for a pressure control according to a closed control loop based on the feedback of at least one pressure transducer (37) placed on said suction duct (18).

**14.** The method according to claim 10 or 11, wherein said step of generating and controlling said pressure in said mould (2, 2') provides for a pressure variation according to depression values connected to foam detection sensors.

**15.** The method according to any one of claims 10 to 14, wherein said step of generating and controlling said pressure in said mould (2, 2') comprises controlling increasing depression values in a time that elapses between a 25% expansion phase of said foam of said polyurethane resin and a 60% expansion phase of said polyurethane resin.

**FIG. 1**

**FIG. 2**

**FIG. 3**

**FIG. 4**

**FIG. 5**

**FIG. 6**

12

11

14

15

13A

13

**FIG. 7**

16

15

17

11

**FIG. 8**

**FIG. 9**

**FIG. 10**

**FIG. 11**

ABSOLUTE P
(mbar)

SUCTION ACTIVATION WITH PROPORTIONAL VACUUM CONTROL

======== RAPID EXPANSION
========= SLOW EXPANSION

# FIG. 12

ABSOLUTE P
(mbar)

SUCTION ACTIVATION WITH STEP CONTROL

EFFECTIVE PRESSURE

PRESSURE REFERENCE

# FIG. 13

ABSOLUTE P
(mbar)

SUCTION ACTIVATION WITH STEP CONTROL

EFFECTIVE PRESSURE
PRESSURE REFERENCE

t (sec)

## FIG. 14

ABSOLUTE P
(mbar)

SUCTION ACTIVATION WITH SINGLE STEP CONTROL

PRESSURE REFERENCE

EFFECTIVE PRESSURE

t (sec)

## FIG. 15

**FIG. 16**

**FIG. 17**

24

UPPER MOULD

UPPER/LOWER SLIDERS COLUMN

UPPER SLIDER

SLIDERS COLUMN

SLIDER 220LT

Z CYLINDER MOVEMENT

SLIDER 190LT

SLIDER 160LT

SLIDER LOWER

LOWER MOULD

**FIG. 18**

UPPER MOULD

UPPER SLIDER
IN OTHER VERSIONS POSITION

24

UPPER MOULD

UPPER SLIDER IN 220LT POSITION

24

**FIG. 19**

Europäisches
Patentamt

European
Patent Office

Office européen
des brevets

# EUROPEAN SEARCH REPORT

**Application Number**

EP 25 15 5849

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 278 949 A1 (CANNON SPA [IT]) 7 February 2018 (2018-02-07) | 1,9-11, 13 | INV. B29C44/34 |
| A | * paragraphs [0068], [0073], [0095]; claims 10, 12 * | 2-8,12, 14,15 | B29C44/60 B29C44/12 B29C44/42 |
| | ----- | | |
| Y | WO 2010/094715 A2 (CRIOS SPA [IT]; CORRADI PIERO [IT]; DE ROSSI CLAUDIO [IT]) 26 August 2010 (2010-08-26) | 1,9-11, 13 | ADD. B29K75/00 |
| A | * page 11, line 29 - page 12, line 28; figure 2 * * page 8, line 20 - line 25; claim 1 * | 2-8,12, 14,15 | B29L31/00 |
| | ----- | | |
| Y | WO 2015/144641 A1 (MANNI S P A [IT]) 1 October 2015 (2015-10-01) | 13 | |
| A | * page 2, line 10 - line 15 * * page 8, line 29 - page 9, line 4 * * page 13, line 17 - page 14, line 12 * * page 9, line 5 - line 10 * | 1-12,15 | |
| | ----- | | |

**TECHNICAL FIELDS SEARCHED (IPC)**

B29C
B29K

The present search report has been drawn up for all claims

| Place of search | Date of completion of the search | Examiner |
|---|---|---|
| The Hague | 30 May 2025 | Tortosa Masiá, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 5849

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2025

| Patent document cited in search report | | Publication date | Patent family member(s) | | Publication date |
|---|---|---|---|---|---|
| EP 3278949 | A1 | 07-02-2018 | CN | 107672107 A | 09-02-2018 |
| | | | EP | 3278949 A1 | 07-02-2018 |
| WO 2010094715 | A2 | 26-08-2010 | CN | 102271890 A | 07-12-2011 |
| | | | EP | 2398630 A2 | 28-12-2011 |
| | | | IT | 1393100 B1 | 11-04-2012 |
| | | | JP | 3174516 U | 29-03-2012 |
| | | | KR | 20110110113 A | 06-10-2011 |
| | | | US | 2011260351 A1 | 27-10-2011 |
| | | | WO | 2010094715 A2 | 26-08-2010 |
| WO 2015144641 | A1 | 01-10-2015 | AU | 2015238500 A1 | 06-10-2016 |
| | | | BR | 112016022135 A2 | 15-08-2017 |
| | | | CA | 2942861 A1 | 01-10-2015 |
| | | | CL | 2016002350 A1 | 20-01-2017 |
| | | | EA | 201691941 A1 | 30-12-2016 |
| | | | EP | 3122530 A1 | 01-02-2017 |
| | | | JP | 2017510486 A | 13-04-2017 |
| | | | US | 2017113382 A1 | 27-04-2017 |
| | | | WO | 2015144641 A1 | 01-10-2015 |

EPO FORM P0459

For more details about this annex : see Official Journal of the European Patent Office, No. 12/82